(19) Europäisches Patentamt
European Patent Office
Office européen des brevets

(11) **EP 1 672 359 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(51) Int Cl.:
*G01N 23/201* (2006.01)  *G01V 5/00* (2006.01)

(21) Anmeldenummer: **05027669.0**

(22) Anmeldetag: **16.12.2005**

(54) **Verfahren zum Messen des Impulsübertragungsspektrums von elastisch gestreuten Röntgenquanten**

Method for measuring the pulse transfer spectrum of elastically diffracted x-ray quanta

Méthode pour mesurer le spectre de transfert d'impulsion de quanta de rayons x diffractés élastiquement

(84) Benannte Vertragsstaaten:
**DE FR GB**

(30) Priorität: **16.12.2004 DE 102004060609**

(43) Veröffentlichungstag der Anmeldung:
**21.06.2006 Patentblatt 2006/25**

(73) Patentinhaber: **GE Homeland Protection, Inc.
Newark, CA 94560 (US)**

(72) Erfinder: **Harding, Geoffrey, Dr.
22547 Hamburg (DE)**

(74) Vertreter: **DTS München
St.-Anna-Strasse 15
80538 München (DE)**

(56) Entgegenhaltungen:
**EP-A- 1 347 287        US-A- 5 231 652
US-A- 5 265 144        US-A1- 2003 031 295**

EP 1 672 359 B1

**Beschreibung**

Die Erfindung befasst sich mit einem Verfahren zum Messen des Impulsübertragungsspektrums von elastisch gestreuten Röntgenquanten mittels dem dann auf das Material zurückgeschlossen werden kann, an dem das Röntgenquant elastisch gestreut wurde.

Aus der EP 1 241 470 B1 ist eine solche Anordnung zur Untersuchung von Gepäckstücken bekannt. Eine solche Anordnung weist einen in Y-Richtung ausgedehnten Fokus auf, der Röntgenstrahlung in X-Richtung emittiert. Durch einen sich in Y-Richtung erstreckenden Primärkollimator werden nur Röntgenquanten in einen dahinter liegenden Untersuchungsbereich durchgelassen, die auf einen einzigen Fokalpunkt gerichtet sind. Der Fokalpunkt bildet dabei den Ursprungspunkt eines kartesischen Koordinatensystems. Es wird somit ein scheibenförmiger inverser Fächerstrahl gebildet. Zwischen dem Fokalpunkt und dem Untersuchungsbereich ist ein Streukollimator angeordnet, der ringförmig um die Z-Richtung ausgebildet ist. Dadurch wird erreicht, dass nur Streustrahlung von einem in dem Untersuchungsbereich befindlichen Objekt durchgelassen wird, die unter einem festen vorgegebenen Streuwinkel vom Streuvoxel ausgeht. In der YZ-Ebene ist ein Detektor angeordnet, der sich entlang der Z-Achse erstreckt. Dadurch wird die Tiefeninformation des Streuvoxels, also seine X-Koordinate, auf eine Parallele zur Y-Achse in der YZ-Ebene abgebildet. Mittels einer solchen Anordnung kann eine schnelle Analyse eines Gepäckstücks erreicht werden, wobei lediglich eine eindimensionale Bewegung des Gepäckstücks entlang der Z-Richtung auf einem Förderband erfolgen muss. Die Scangeschwindigkeit ist allerdings durch die winkelabhängige Empfindlichkeit der Detektorelemente beschränkt.

Es wurde versucht, die lediglich in Z-Richtung angeordneten Detektoren durch ein sich in der YZ-Ebene befindliches Detektorarray aus einer Reihe von Detektorelementen zu ersetzen. Auf Grund der geometrischen Abbildungsverhältnisse werden die Streuquanten eines Streuvoxels immer auf elliptische Gebilde in der YZ-Ebene abgebildet. Durch eine Integration der Streuquanten in den dazugehörigen Detektorelementen kann eine größere Ausbeute und damit eine schnellere Erfassung des Materials am Ort des Streuvoxels erfolgen bzw. erhält man für das Impulsübertragungsspektrum ein besseres Signal-Rausch-Verhältnis. Allerdings sind mit solchen Anordnungen nur Verfahren durchführbar, die zu einem einzigen festen, vorgegebenen Streuwinkel gehören. Da es jedoch je nach der Materialdichte im zu untersuchenden Gepäckstück sinnvoll ist, die Energie des Photons - und damit des Streuwinkels - bei gleichbleibender Impulsübertragungsfunktion zu variieren, muss ein Kompromiss für den untersuchten Streuwinkel gefunden werden.

Ferner ist aus dem Dokument EP-A-1347287 eine Vorrichtung bekannt, die einen ortsauflösenden und energieauflösenden Detektor und die gleiche Beleuchtungsanlage, die in der oben genannten Offenbarung beschrieben wird, aufweist.

Aufgabe der Erfindung ist es, ein Verfahren zur Verfügung zu stellen, mit dem der Impulsübertrag über ein weiteres Gebiet analysiert und ein besseres Signal-Rausch-Verhältnis erzielt werden kann.

Die Aufgabe wird erfindungsgemäß durch ein Verfahren mit den Merkmalen des Patentanspruchs 1 gelöst. Dadurch, dass gleichzeitig das Energiespektrum von gestreuten Röntgenquanten aus dem Streuvoxel unter verschiedenen Streuwinkeln erfolgt, kann in derselben Scanzeit eine bedeutend höhere Ausbeute an Streuquanten, die für die Auswertung relevant sind, in dem Detektor erfasst werden. Auf Grund der ortsauflösenden und energieauflösenden Detektorelemente kann in Verbindung mit den geometrischen Daten der Röntgendurchleuchtungsanlage auf die Zusammenhänge von vorliegendem Streuwinkel und Beugungsprofil des dazugehörigen Streuvoxels geschlossen werden. Um das Material, das am Ort des Streuvoxels vorliegt, zu bestimmen, wird das unter Streuwinkeln mit einer konstanten Z-Komponente erzeugte Beugungsprofil anhand der dazugehörigen Detektorelemente und den gemessenen Streuquanten erstellt, so dass für dasselbe Streuvoxel anhand der bekannten geometrischen Abbildungsverhältnisse das Beugungsprofil für einen anderen Streuwinkel, dessen Streuquanten in einer anderen Anordnung von Detektorelementen detektiert werden, bestimmt wird. Erfindungsgemäß ist es somit möglich, zu einem Streuvoxel die Beugungsprofile und somit auch den Impulsübertrag für unterschiedliche Streuwinkel zu bestimmen. Damit ist es möglich, in derselben Zeit, die bislang für die Untersuchung eines einzigen Streuwinkels aufgewandt werden musste, eine Variation im Streuwinkel zu erhalten und somit für die Bestimmung des Materials im Streuvoxel den optimalen Streuwinkel heranziehen. Dies bedeutet, dass bei einer hohen Dichte im untersuchten Streuvoxel ein kleiner Streuwinkel vorteilhaft ist und bei einer geringen Dichte im Streuvoxel ein großer Streuwinkel bevorzugt wird. Dadurch, dass der Detektor als ein zweidimensionaler Pixel-Detektor ausgebildet ist, können Streuquanten nicht nur entlang der Z-Achse erfasst werden, sondern ortsaufgelöst über einen größeren Raumwinkel. Unter einem Pixel-Detektor (Englisch "pixellated detector") wird in dieser Anmeldung ein Detektorarray verstanden, das einzelne Detektorelemente aufweist, die unabhängig voneinander die auftreffende Streustrahlung erfassen. Dabei kann es sich sowohl um einen Einkristall handeln als auch um mehrere räumlich getrennte Detektorelemente. Es kann jedes einzelne Detektorelement einen Read-Out-Chip aufweisen; solche Pixel-Detektoren werden im Bereich der Medizin verwendet. Durch das Erfassen von Streuquanten, die auch neben der Z-Achse auf den Detektor auftreffen, kann ein größerer Raumwinkel abgedeckt werden und das Signal-Rausch-Verhältnis wird erhöht bzw. es wird nur eine geringere Scanzeit für das Objekt benötigt, als dies mit einer Anordnung gemäß dem oben zitierten Stand der Technik möglich ist.

Eine vorteilhafte Weiterbildung der Erfindung sieht vor, dass vor der Kombination der jeweiligen Beugungsprofile eine Gewichtung der Beugungsprofile erfolgt. Dadurch kann eine noch genauere und bessere Bestimmung des Impulsübertrags und somit des Materials im Streuvoxel erhalten werden. Vorteilhafterweise erfolgt die Gewichtung nach der in dem jeweiligen Detektorelement gemessenen Photonenanzahl. Dadurch werden diejenigen Detektorelemente bevorzugt, die das beste Signal-Rausch-Verhältnis aufweisen.

Eine weitere vorteilhafte Weiterbildung der Erfindung sieht vor, dass die Gewichtung nach der Größe des Streuwinkels erfolgt. Bevorzugt werden dabei Beugungsprofile von benachbarten Detektorelementen für große Streuwinkel ungewichtet addiert. Auf Grund der kleinen Abmessungen der Detektorelemente und der damit hohen Winkelauflösung besteht zwischen benachbarten Detektorelementen bei großen Streuwinkeln kaum eine Änderung im Beugungsprofil.

Eine weitere vorteilhafte Weiterbildung der Erfindung sieht vor, dass Linien des zu untersuchenden Objekts über einen geeigneten Streukollimator auf Linien von Detektorelementen abgebildet werden. Dies ist immer dann problemlos möglich, wenn die Ausdehnung des gesamten Detektors in Y-Richtung klein ist, so dass nur relativ kleine Winkelanteile in Y-Richtung des Gesamtstreuwinkels über die gesamte Längenvariation des Detektors in Y-Richtung vorliegen. In diesem Falle ist eine Abbildung einer Linie des zu untersuchenden Objekts quasi auf eine Gerade - dies ist auch die Näherung einer Ellipse für geringe Ausdehnung - gegeben.

Vorteilhafterweise ist der Streukollimator aus parallelen Stahllamellen gebildet, die parallel zur Y-Achse verlaufen und unter einem vorgegebenen Streuwinkel zur XY-Ebene geneigt sind, oder aus in X-Richtung übereinander angeordneten Längsschlitzen, die sich in Y-Richtung erstrecken und nur gestreute Röntgenquanten durchlassen, die unter einem vorgegebenen Streuwinkel zur X-Achse vom Streuvoxel ausgehen. Dies stellt sehr einfach zu realisierende Streukollimatoren dar.

Weitere vorteilhafte Weiterbildungen sind Gegenstand der Unteransprüche. Weitere Vorteile und Einzelheiten der Erfindung werden anhand eines in den Figuren dargestellten Ausführungsbeispiels der Erfindung beschrieben. Es zeigen:

Fig. 1 eine schematische Ansicht einer erfindungsgemäßen Anordnung ohne Sekundärkollimatoren,

Fig. 2 einen Längsschnitt durch die Anordnung der Fig. 1 entlang der XZ-Ebene mit Streukollimatoren, jedoch ohne Primärkollimator und

Fig. 3 ein Diagramm, in dem der minimale und der maximale Streuwinkel in Abhängigkeit des Primärstrahlwinkels aufgetragen sind.

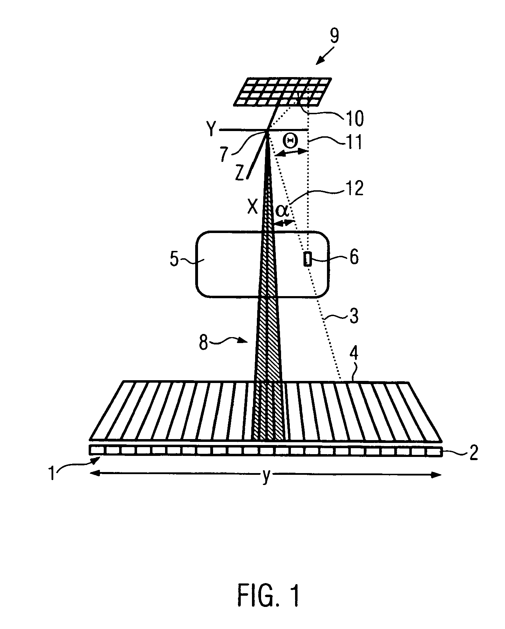

In Fig. 1 ist schematisch ein Ausführungsbeispiel einer erfindungsgemäßen Anordnung dargestellt. Es handelt sich hierbei um einen Schnitt entlang der XY-Ebene. Allerdings ist die erfindungsgemäße Anordnung im oberen Bereich, d. h. im Bereich der YZ-Ebene, perspektivisch dargestellt.

Die erfindungsgemäße Anordnung weist eine sich in Y-Richtung erstreckende Anode 1 auf, die eine Reihe von aneinander gereihten diskreten Fokuspunkten 2 aufweist, die beim Beschuss mit einem Elektronenstrahl entlang der Anode 1 wandern. Bevorzugt wird dabei eine Anzahl von Fokuspunkten 2 im Bereich von 60 (dargestellt sind aus Gründen der Übersichtlichkeit lediglich eine geringe Anzahl dieser Fokuspunkte 2). Die von jedem einzelnen Fokuspunkt 2 ausgehenden Röntgenquanten werden durch einen Primärkollimator 4, der eine Fächerform aufweist, so begrenzt, dass sich ein inverser Fächerstrahl 8 an Röntgenquanten als Primärstrahl 3 ergibt. Dieser inverse Fächerstrahl 8 verläuft in der XY-Ebene und konvergiert auf einen einzigen Fokalpunkt 7, der gleichzeitig den Koordinatenursprung eines kartesischen Koordinatensystems bildet.

Der Primärstrahl 3 trifft im Objektraum auf ein Objekt 5. Bei dem Objekt 5 handelt es sich, wenn man vom häufigsten Anwendungsfall der erfindungsgemäßen Anordnung in Form einer Gepäckprüfanlage ausgeht, um einen Koffer.

Dieses Objekt 5 liegt dann auf einem Förderband (nicht gezeigt), welches sich entlang der Z-Achse bewegen lässt. Solange das Objekt 5 nicht entlang der Z-Achse durch das Förderband bewegt wird, durchsetzt der inverse Fächerstrahl 8 das Objekt 5 entlang einer dünnen Scheibe in der XY-Ebene. Diese Scheibe wird dadurch verändert, dass eine eindimensionale Bewegung des Förderbands in Z-Richtung erfolgt, so dass ein vollständiger Scanvorgang des Objekts 5 durch die Bewegung des Förderbands erfolgen kann.

Die momentan gescannte dünne Scheibe besteht aus einer Anzahl von Streuvoxeln 6, die jeweils eine X-Koordinate (unterschiedliche Tiefe entlang der X-Richtung) und eine Y-Koordinate (unterschiedliche seitliche Anordnung bezüglich der X-Achse) aufweisen. An jedem einzelnen Streuvoxel 6 wird der Primärstrahl 3 von Röntgenquanten gestreut. Von den an diesem Streuvoxel 6 gestreuten Röntgenquanten interessieren im Rahmen der vorliegenden Erfindung lediglich die kohärent gestreuten Röntgenquanten. Diese werden mittels eines nicht dargestellten - beispielsweise aus der EP 1 241 470 B1 bekannten - Streukollimators 13 in die YZ-Ebene abgebildet, so dass aus ihrer Position entlang der Z-Achse eine direkte Zuordnung zur Tiefe entlang der X-Richtung im Objekt 5 erfolgt. Dies bedeutet, dass als Streustrahl 11 lediglich solche am Streuvoxel 6 gestreuten Röntgenquanten vom Streukollimator 13 durchgelassen werden, die eine vorgegebene konstante Z-Komponente $\Theta_z$ des Streuwinkels $\Theta$ aufweisen. Die durchgelassenen Streuquanten 11 sind in Fig. 1 gestrichelt dargestellt.

Auf Grund des um die Z-Richtung ringförmig ausgebildeten Streukollimators gelangen nicht nur Streuquanten in der XZ-Ebene durch diesen hindurch, sondern auch solche, die eine von Y = 0 verschiedene Koordinate aufweisen. Diese werden von einem in der YZ-Ebene angeordneten zweidimensionalen Detektor 9 erfasst. Die aus der EP 1 241 470 B1 bekannte Detektoranordnung erstreckt sich lediglich entlang der Z-Achse, dagegen erstrecken sich die einzelnen erfindungsgemäßen Detektorelemente 10 auch in Y-Richtung. Es handelt sich hierbei um einen Pixel-Detektor, der wie oben beschrieben aufgebaut ist. Dadurch können mehr Streuquanten 11 des vom Streuvoxel 6 stammenden Streustrahls, die durch den Streukollimator 13 durchgelassen werden und eine feste Z-Komponente $\Theta_Z$ des Streuwinkels $\Theta$ aufweisen, vom Detektor 9 erfasst werden. Je mehr Streuquanten 11 erfasst werden, desto weniger Zeit wird benötigt, um das Impulsübertragungsspektrum der elastisch gestreuten Röntgenquanten aufzunehmen.

Bei dem Detektor 9 handelt es sich um ein Detektorarray, das in der YZ-Ebene angeordnet ist. Der Detektor 9 ist dabei von der Y-Achse entfernt angeordnet. Die Entfernung ist so gewählt, dass die vom Streuvoxel 6 herrührenden Streuquanten 11 unter einem Streuwinkel $\Theta$, der unter 10° liegt, auf ihn treffen. Dieser enge Vorwärtswinkel in der elastischen Streuung wird verwendet, da für die in Frage kommenden Sprengstoffe die Impulsübertragungsfunktion genau in diesem Bereich einen starken Peak aufweist, der zu größeren Streuwinkeln $\Theta$ stark abnimmt. Der Detektor 9 ist aus einer Vielzahl einzelner Detektorelemente 10 zu einem Detektorarray zusammengesetzt. Jedes einzelne Detektorelement 10 ist einzeln auslesbar und e-nergieauflösend. Damit kann die Impulsübertragungsfunktion für jedes einzelne Streuvoxel 6, egal in welcher Tiefe - das bedeutet, welche X-Koordinate es aufweist - es sich im Objekt 5 befindet, auch entlang der Y-Richtung zugeordnet werden. Dadurch wird ein größerer Raumwinkel erhalten, für den die zu dem jeweiligen Streuvoxel 6 gehörigen elastisch gestreuten Streuquanten 11 detektiert werden können. Dadurch werden mehr Streuquanten 11 detektiert als dies der Fall wäre, wenn nur Detektorelemente 10 entlang der Z-Achse angeordnet wären. Somit ergibt sich entweder eine bessere Auflösung auf Grund des gesteigerten Signal-Rausch-Verhältnisses oder bei gegenüber dem Stand der Technik gleich bleibendem Signal-Rausch-Verhältnis eine bedeutend verkürzte Scanzeit des Objekts 5.

Auf Grund der Abbildungsgeometrie verlaufen die einem Streuvoxel 6 zugeordneten Detektorelemente 10 auf einer Ellipsenbahn, die symmetrisch zur Z-Achse verläuft und sich mit steigendem Abstand von der Z-Achse zur Y-Achse orientiert. Allerdings ist die Form der Ellipse nicht nur von der Tiefe des Streuvoxels 6 innerhalb des Objekts 5, d. h. von seiner X-Koordinate, abhängig, sondern auch davon, unter welchem Primärstrahlwinkel $\alpha$ zur X-Achse sich das Streuvoxel 6 befindet. Auf Grund der Beziehung zwischen dem Beugungsprofil, das durch den Impulsübertrag x definiert wird und dem Energiespektrum ergibt sich die Gleichung:

$$x = \frac{E \cdot \sin(\Theta/2)}{hc}$$

Der Streuwinkel $\Theta$ setzt sich dabei aus zwei Komponenten zusammen; einem Z-Anteil und einem Y-Anteil. Auf Grund geometrischer Überlegungen ergibt sich, dass der Wert des Impulsübertrags x auch abhängig ist von dem Primärstrahlwinkel $\alpha$, der das Streuvoxel 6 trifft.

Das Streuvoxel 6 hat die Koordinaten ($X_S$, $Y_S$, 0). Auf Grund der scheibenförmigen Durchleuchtung des inversen Fächerstrahls 8 ist die Z-Koordinate des Streuvoxels 6 immer gleich Null. Der Streuwinkel $\Theta$ ist aus den elementaren geometrischen Verhältnissen für jedes einzelne Streuvoxel 6 an jeder Position des Primärstrahls 3 bestimmbar. Damit kann die korrekte Berechnung des Impulsübertragungsspektrums x für jedes einzelne Streuvoxel 6 bestimmt werden.

Auf Grund der oben genannten Gleichung korreliert ein kleiner Streuwinkel $\Theta$ mit einer hohen Photonenenergie bei konstantem Impulsübertrag x. Solche kleinen Streuwinkel $\Theta$ sind für Objekte 5 mit hoher Dichte vorteilhaft, da sie Photonen benötigen, die eine hohe Energie aufweisen, damit eine adäquate Durchstrahlung erfolgen kann. Allerdings steigt das Streusignal bei konstanter Peak-Auflösung im Beugungsprofil stark für größere Streuwinkel $\Theta$ an. Für Objekte 5, die nur eine geringe Dichte oder eine relativ hohe Transparenz aufweisen, ist es deswegen vorteilhafter, diese bei größeren Streuwinkeln $\Theta$ zu untersuchen.

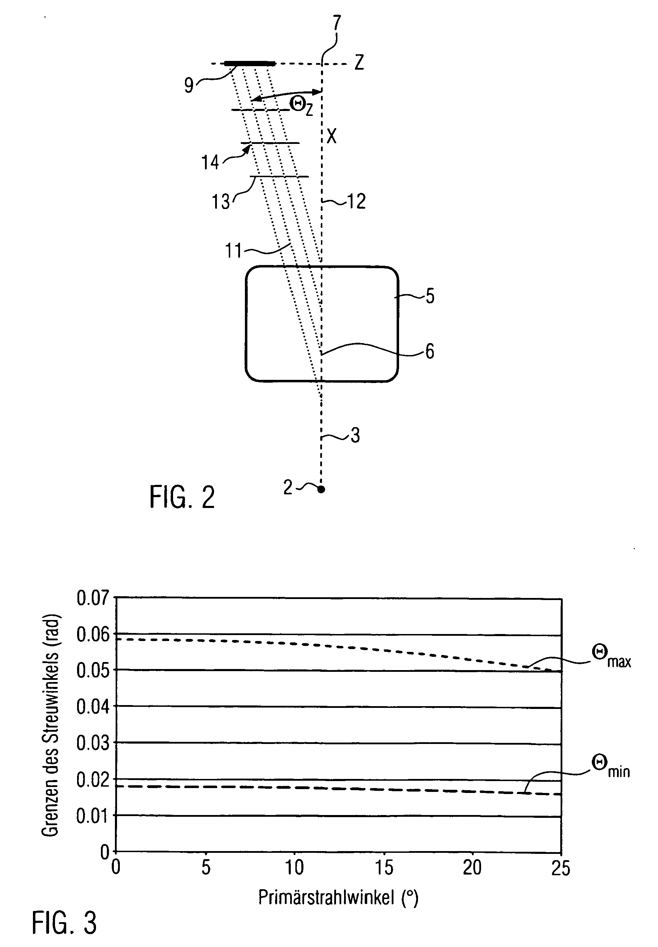

In Fig. 2 ist ein Streukollimator 13 dargestellt, mit dem eine solche Untersuchung möglich ist und ein erfindungsgemäßes Verfahren durchgeführt werden kann. Der Streukollimator 13 besteht aus drei parallel zueinander angeordneten Platten, die parallel zur YZ-Ebene verlaufen und die jeweils vier Längsschlitze 14 (jede andere Anzahl ist genauso möglich) parallel zur Y-Achse aufweisen. Die Längsschlitze 14 sind so angeordnet, dass nur Streuquanten 11 in den Detektor 9 gelangen, die eine konstante Z-Komponente $\Theta_Z$ des Streuwinkels $\Theta$ aufweisen. Dies gilt unabhängig davon, in welcher Tiefe (X-Koordinate) sich das Streuvoxel 6 im Objekt 5 befindet. Da vom Streuvoxel 6 nicht nur Streuquanten 11 in Z-Richtung ausgehen, sondern entlang des gesamten Längsschlitzes 14, wird nicht nur ein einziges Detektorelement 10 von Streuquanten, die vom Streuvoxel 6 ausgehen, getroffen, sondern eine ganze Reihe von Detektorelementen 10, die parallel zur Y-Achse verlaufen. Auf Grund allgemeiner geometrischer Beziehungen setzt sich der totale Streuwinkel $\Theta$ aus den beiden Komponenten $\Theta_Y$ und $\Theta_Z$ zusammen. $\Theta_Z$ ist hierbei in Fig. 2 dargestellt und ist die Projektion des totalen Streuwinkels $\Theta$ auf die XZ-Ebene. Die andere Komponente $\Theta_Y$ ist die

nicht dargestellte Projektion des totalen Streuwinkels Θ auf die XY-Ebene. Da Streuwinkel Θ im Bereich von unter 0,07 rad gemessen werden, ergibt sich auf Grund der Kleinwinkel-Näherung:

$$\Theta = \sqrt{\left( \Theta_Z{}^2 + \Theta_Y{}^2 \right)}$$

Im Ergebnis ergibt sich somit, dass der Streuwinkel Θ entlang der Reihe von getroffenen Detektorelementen 10 variiert.

In Fig. 3 ist ein Diagramm dargestellt, in dem die Variation des minimalen Streuwinkels $\Theta_{min}$ und des maximalen Streuwinkels $\Theta_{max}$ über den Primärstrahlwinkel $\alpha$ aufgetragen sind. Diese entsprechen Streuquanten 11 vom Streuvoxel 6 zum Zentrum des Detektors 9 entlang der Z-Achse (Y-Komponente gleich Null) und dem Ende der Linie von Detektorelementen 10, d.h. die maximale halbe Ausdehnung des Detektors 9 in Y-Richtung. In Fig. 3 wird von einer Detektorbreite in Y-Richtung von 100 mm ausgegangen, wobei für die Höhe der gesamten Anordnung, d. h. von dem Fokuspunkt 2 bis zum Fokalpunkt 7 (in Fig. 2) von 1800 mm und einem Öffnungswinkel des inversen Fächerstrahls 8 von ±25° ausgegangen wird. Gemäß des Standes der Technik müsste für den Streuwinkel Θ ein Kompromiss gefunden werden, der bei ca. 0,0368 rad liegt. Dagegen laufen die Kurven für $\Theta_{min}$ und $\Theta_{max}$ über einen weiten Bereich des Primärstrahlwinkels $\alpha$ beinahe parallel. Nur für größere Primärstrahlwinkel $\alpha$ über 10° geht die Kurve für den maximalen Streuwinkel $\Theta_{max}$ schneller nach unten als für den minimalen Streuwinkel $\Theta_{min}$. Allerdings ist der Wert des maximalen Streuwinkels $\Theta_{max}$ selbst bei einem Primärstrahlwinkel $\alpha$ von 25° immer noch bei ca. 0,05 rad.

Die für die Durchführung des erfindungsgemäßen Verfahrens nötigen Angaben der Koordinaten des Streuvoxels 6 und des Detektorelements 10, in dem das Streuquant 11 vom jeweils zugeordneten Streuvoxel 6 auftrifft, können auf Grund der geometrischen Gegebenheiten einfach bestimmt werden. Zwischen der X-Koordinate des Streuvoxels 6 ($X_S$) und der Y-Koordinate des Detektors ($Y_D$) besteht eine Beziehung gemäß:

$$Y_D = \tan \alpha \cdot X_S$$

Da der Primärstrahlwinkel $\alpha$ auf Grund der zeitlichen Abfolge der Fokuspunkte 2 bestimmt werden kann, kann $Y_S$ bestimmt werden, wenn $X_S$ bekannt ist. Auf Grund der geometrischen Verhältnisse gemäß Fig. 2 kann $X_S$ über die Gleichung bestimmt werden:

$$X_S = \frac{Z_D}{\tan \Theta_Z}$$

$Z_D$ ist die Z-Koordinate des Detektorelements 10, das von dem Streuquant 11 vom Streuvoxel 6 getroffen wurde und $\Theta_z$ die oben schon angegebene Projektion des gesamten Streuwinkels Θ auf die XZ-Ebene.

Im Ergebnis lässt sich auf Grund der Kenntnis der Koordinaten des Streuvoxels 6 ($X_S$, $Y_S$, 0) und den Koordinaten des Detektorelements (0, $Y_D$, $Z_D$) der totale Streuwinkel Θ bestimmen. Wenn dieser Streuwinkel Θ in die oben aufgeführte Gleichung für den Impulsübertrag x bei bekannter Photonenenergie eingesetzt wird, wird dem jeweiligen Streuwinkel Θ der korrekte Impulsübertrag x zugewiesen. Somit ist es möglich, mit derselben Anordnung im Rahmen eines einzigen Scanvorgangs den Impulsübertrag x für unterschiedliche Streuwinkel Θ zu bestimmen. Je nachdem, ob es sich bei dem gerade untersuchten Streuvoxel 6 um einen Bereich hoher oder geringer Dichte handelt, kann dadurch die Information für den Impulsübertrag entweder für große oder kleine Streuwinkel Θ herangezogen werden. Dadurch wird ein besseres Signal-Rausch-Verhältnis erreicht und darüber hinaus eine Erhöhung der Messgeschwindigkeit bei konstanter Leistung der Röntgenröhre.

Beugungsprofile, die in Detektorelementen 10 aufgenommen wurden, die in einer Linie angeordnet sind und Streuquanten 11 von dem selben Streuvoxel 6 aufzeichnen, können entweder direkt überlagert werden, um ein noch besseres Signal-Rausch-Verhältnis zu erreichen, oder können nach einer Gewichtung überlagert werden. Als Gewichtungsindex kann die Anzahl von Photonen in dem Spektrum für das jeweilige Detektorelement 10 herangezogen werden, so dass diejenigen Beugungsprofile die größte Gewichtung in derjenigen Zone erhalten, die das beste Signal-Rausch-Verhältnis aufweist. Darüber hinaus können auch die Signale von benachbarten Detektorelementen 10 unter großen Streuwinkeln Θ ohne Gewichtung aufsummiert werden, da der Effekt von den räumlich sehr kleinen Detektorelementen 10 auf die Winkelauflösung für solch große Streuwinkel Θ bezüglich der detektierten Streuquanten 11 sehr gering ist. Da unterschiedliche Detektorelemente 10 Streuereignisse mit der optimalen Photonenenergie unter unterschiedlichen Streuwinkeln sehen, kann der Bereich der Beugungsprofile, der analysiert werden kann, durch das Energie-adaptive erfindungsgemäße Konzept erhöht werden.

Im dargestellten Ausführungsbeispiel wurde das Energie-adaptive Konzept für einen Streukollimator 13 dargestellt und beschrieben, der Linien von Streuvoxeln 6 auf Linien von Detektorelementen 10 abbildet. Allerdings ist es genauso möglich, dieses erfindungsgemäße Konzept bei anderen Formen von Streukollimatoren 13 anzuwenden. Das erfindungsgemäße Energie-adaptive Konzept, dass Streuquanten 11 von einem bestimmten Streuvoxel 6 gleichzeitig unter verschiedenen Streuwinkeln Θ aufgenommen werden und dass die korrigierten Beugungsprofile mittels verschiedener Gewichtungsverfahren zu einem kombinierten Beugungsprofil aufsummiert werden können, ist damit unabhängig von einer speziellen Geometrie des Streukollimators 13.

Bezugszeichenliste

| | |
|---|---|
| 1 | Anode |
| 2 | Fokuspunkt |
| 3 | Primärstrahl |
| 4 | Primärkollimator |
| 5 | Objekt |
| 6 | Streuvoxel |
| 7 | Fokalpunkt |
| 8 | inverser Fächerstrahl |
| 9 | Detektor |
| 10 | Detektorelement |
| 11 | Streuquanten |
| 12 | Transmissionsstrahl |
| 13 | Streukollimator |
| 14 | Längsschlitz |
| Θ | Streuwinkel |
| $\Theta_z$ | Z-Komponente des Streuwinkels |
| α | Primärstrahlwinkel |

**Patentansprüche**

1. Verfahren zum Messen des Impulsübertragungsspektrums von elastisch gestreuten Röntgenquanten (11), die von einem Streuvoxel (6) innerhalb eines zu untersuchenden Objekts (5) stammen, das sich in einer Röntgendurchleuchtungsanlage befindet, die eine in Y-Richtung ausgedehnte Anode (1) mit einer Vielzahl von Fokuspunkten (2) aufweist, die Röntgenstrahlung in X-Richtung emittiert und einen Primärkollimator (4) aufweist, der nur Primärstrahlung (3) durchlässt, die auf einen einzigen Fokalpunkt (7) im Ursprung eines kartesischen Koordinatensystems gerichtet ist, und

mit einem Streukollimator (13), der zwischen dem Untersuchungsbereich und dem Fokalpunkt (7) angeordnet ist und der nur Streuquanten (11) von einem in den Untersuchungsbereich einbringbaren Objekt (5) durchlässt, die unter einem Streuwinkel (Θ) mit einer konstanten Z-Komponente ($\Theta_Z$) emittiert werden;
und mit einem Detektor (9);
wobei die X-Komponenete eines Streuvoxels (6) des Objekts (5) eindeutig auf die Z-Komponente des Detektors (9) abgebildet wird;
mit folgenden Schritten:

- gleichzeitige Aufnahme des Energiespektrums von Streuquanten (11) aus dem Streuvoxel (6) unter verschiedenen Streuwinkeln (Θ) mit einem ortsauflösenden und energieauflösenden Detektor (9) in der YZ-Ebene;
- Bestimmung des Impulsübertrags, also des Beugungsprofils des Streuvoxels (6), aus den geometrischen Daten der Röntgendurchleuchtungsanlage für die verschiedenen Streuwinkel (Θ);
- Kombination der jeweiligen Beugungsprofile, die zu verschiedenen Streuwinkeln (Θ) gehören, zu einem Gesamtbeugungsprofil.

2. Verfahren nach Anspruch 1, **dadurch gekennzeichnet, dass** vor der Kombination der jeweiligen Beugungsprofile eine Gewichtung der Beugungsprofile erfolgt.

3. Verfahren nach Anspruch 2, **dadurch gekennzeichnet, dass** die Gewichtung nach der in dem jeweiligen Detektorelement (10) gemessenen Photonenanzahl erfolgt.

4. Verfahren nach Anspruch 2, **dadurch gekennzeichnet, dass** die Gewichtung nach der Größe des Streuwinkels (Θ) erfolgt.

5. Verfahren nach Anspruch 4, **dadurch gekennzeichnet, dass** die Beugungsprofile von benachbarten Detektorelementen (10) für große Streuwinkel (Θ) ungewichtet addiert werden.

6. Verfahren nach einem der Ansprüche 1 bis 5, **dadurch gekennzeichnet, dass** Linien des zu untersuchenden Objekts (5) über einen geeigneten Streukollimator (13) auf Linien von Detektorelementen (10) abgebildet werden.

7. Verfahren nach Anspruch 6, **dadurch gekennzeichnet, dass** der Streukollimator (13) aus parallelen Stahllamellen gebildet ist, die parallel zur Y-Achse verlaufen und unter einem vorgegebenen Streuwinkel (Θ) zur XY-Ebene geneigt sind, oder aus in X-Richtung übereinander angeordneten Längsschlitzen (14) gebildet ist, die sich in Y-Richtung erstrecken und nur gestreute Röntgenquanten (11) durchlassen, die unter einem vorgegebenen Streuwinkel (Θ) zur X-Achse vom Streuvoxel (6) ausgehen.

8. Verfahren nach einem der Ansprüche 2 bis 7, **dadurch gekennzeichnet, dass** die Gewichtung in Abhängigkeit vom Primärstrahlwinkel (α) erfolgt.

**Claims**

1. Method of measuring the momentum transfer spectrum of elastically scattered X-ray quanta (11) which come from a scatter voxel (6) inside an object (5) to be examined, which is located in a radioscopy unit which has an anode (1) extended in Y-direction with a plurality of focus points (2), which emits X-radiation in X-direction and has a primary collimator (4) which allows through only primary radiation (3) which is aimed at a single isocentre (7) at the origin of a cartesian coordinates system, and

with a scatter collimator (13) which is arranged between the examination area and the isocentre (7) and which allows through only scatter quanta (11), from an object (5) that can be introduced in the examination area, which are emitted at an angle of scatter ($\Theta$) with a constant Z-component ($\Theta_Z$);

and with a detector (9);

the X-component of a scatter voxel (6) of the object (5) clearly being imaged onto the Z-component of the detector (9);

with the following steps:

- simultaneous recording of the energy spectrum of scatter quanta (11) from the scatter voxel (6) at different angles of scatter ($\Theta$) with a spatially-resolving and energy-resolving detector (9) in the YZ-plane;
- determining of the momentum transfer, thus of the diffraction profile of the scatter voxel (6), from the geometric data of the radioscopy unit for the different angles of scatter ($\Theta$);
- combination of the respective diffraction profiles which belong to different angles of scatter ($\Theta$) to produce a total-diffraction profile.

2. Method according to claim 1, **characterized in that** before the combining of the respective diffraction profiles a weighting of the diffraction profiles takes place.

3. Method according to claim 2, **characterized in that** the weighting takes place according to the number of photons measured in the respective detector element (10).

4. Method according to claim 2, **characterized in that** the weighting takes place according to the size of the angle of scatter ($\Theta$).

5. Method according to claim 4, **characterized in that** the diffraction profiles of adjacent detector elements (10) are added up unweighted for large angles of scatter ($\Theta$).

6. Method according to one of claims 1 to 5, **characterized in that** lines of the object (5) to be examined are imaged via a suitable scatter collimator (13) onto lines of detector elements (10).

7. Method according to claim 6, **characterized in that** the scatter collimator (13) is formed from parallel steel plates which run parallel to the Y-axis and are inclined at a preset angle of scatter ($\Theta$) to the XY-plane, or is formed out of longitudinal slits (14) arranged one above the other in X-direction, which extend in Y-direction and allow through only scattered X-ray quanta (11) which emanate from the scatter voxel (6) at a preset angle of scatter ($\Theta$) to the X-axis.

8. Method according to one of claims 2 to 7, **characterized in that** the weighting takes place depending on the primary beam emission angle ($\alpha$).

**Revendications**

1. Procédé de mesure du spectre de transfert d'impulsion de quanta de rayons X (11) diffusés élastiquement qui proviennent d'un voxel de diffusion (6) à l'intérieur d'un objet (5) à examiner, ledit objet se trouvant dans une installation d'examen aux rayons X qui présente une anode (1) élargie dans la direction Y avec une pluralité de points de focalisation (2), celle-ci émettant un rayonnement X dans la direction X et présentant un collimateur primaire (4) ne laissant passer que le rayonnement primaire (3) orienté sur un seul point focal (7) à l'origine d'un système de coordonnées cartésien, et

avec un collimateur de diffusion (13) disposé entre la zone d'examen et le point focal (7) et ne laissant passer que les quanta de diffusion (11) d'un objet (5) pouvant être placé dans la zone d'examen, lesdits quanta étant émis selon un angle de diffusion ($\Theta$) avec une composante Z ($\Theta_Z$) constante ;

et avec un détecteur (9) ;

la composante X d'un voxel de diffusion (6) de l'objet (5) étant reproduite de façon précise sur la composante Z du détecteur (9) ;

avec les étapes suivantes :

- absorption simultanée du spectre d'énergie des quanta de diffusion (11) provenant du voxel de diffusion (6) selon différents angles de diffusion ($\Theta$) avec un détecteur (9) à résolution locale et à résolution en énergie dans le plan YZ ;
- détermination du transfert d'impulsion, donc du profil de diffraction du voxel de diffusion (6) à partir des données géométriques de l'installation d'examen aux rayons X pour les différents angles de diffusion ($\Theta$) ;
- combinaison des profils de diffraction respectifs appartenant aux différents angles de diffusion ($\Theta$) pour former un profil de diffraction d'ensemble.

2. Procédé selon la revendication 1, **caractérisé en ce qu'**une pondération des profils de diffraction se produit avant la combinaison des profils de diffraction respectifs.

3. Procédé selon la revendication 2, **caractérisé en ce que** la pondération est réalisée en fonction du nombre de photons mesurés dans l'élément de détection (10) respectif.

4. Procédé selon la revendication 2, **caractérisé en ce que** la pondération est réalisée en fonction de la taille de l'angle de diffusion (Θ).

5. Procédé selon la revendication 4, **caractérisé en ce que** les profils de diffraction sont ajoutés de façon non pondérée aux éléments de détection (10) voisins pour des angles de diffusion (Θ) importants.

6. Procédé selon l'une quelconque des revendications 1 à 5, **caractérisé en ce que** les lignes de l'objet (5) à examiner sont reproduites sur les lignes des éléments de détection (10) à examiner par l'intermédiaire d'un collimateur de diffusion (13) approprié.

7. Procédé selon la revendication 6, **caractérisé en ce que** le collimateur de diffusion (13) est formé de lamelles en acier parallèles s'étendant parallèlement à l'axe Y et étant inclinées selon un angle de diffusion (Θ) prédéfini par rapport au plan XY, ou étant formé de rainures longitudinales (14) disposées les unes au-dessus des autres dans la direction X, lesdites rainures s'étendant dans la direction Y et ne laissant passer que les quanta de rayons X (11) diffusés sortant du voxel de diffusion (6) selon un angle de diffusion (Θ) prédéfini en direction de l'axe X.

8. Procédé selon l'une quelconque des revendications 2 à 7, **caractérisé en ce que** la pondération est fonction de l'angle de rayonnement primaire (α).

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1241470 B1
- EP 1347287 A